# NOUVEAU FASCICULE DE BREVET EUROPEEN

(11) **EP 3 090 190 B2**
(45) Date de publication et mention de la décision concernant l'opposition: **09.09.2026**
(45) Mention de la délivrance du brevet: 18.10.2017
(21) Numéro de dépôt: 14827446.7
(22) Date de dépôt: 23.12.2014
(51) Int. Cl.: F16D 51/22, F16D 51/50, F16D 65/56, B60T 13/74

(54) **ACTIONNEUR AVEC SYSTEME VIS-ECROU IRREVERSIBLE, FREIN A TAMBOUR ET DISPOSITIF DE FREINAGE AINSI EQUIPES**
AKTUATOR MIT IRREVERSIBLEM GEWINDE, TROMMELBREMSAKTUATOR UND BREMSVORRICHTUNG MIT SO EINEM AKTUATOR
ACTUATOR WITH NON-REVERSIBLE SCREW-AND-NUT SYSTEM, DRUM BRAKE AND BRAKING DEVICE PROVIDED WITH SAME

(30) Priorité: 30.12.2013 FR 1363707
(43) Date de publication de la demande: 09.11.2016
(73) Titulaire: Chassis Brakes International B.V., 5656 AG Eindhoven (NL)
(72) Inventeur: GUIGNON, Cédric, 94510 La Queue en Brie (FR); LUU, Gérard, 93160 Noisy le Grand (FR); DUPAS, Christophe, 91120 Palaiseau (FR); PASQUET, Thierry, 94700 Vincennes (FR); MOLINARO, Alberto, 93160 Noisy le Grand (FR)
(74) Mandataire: IPAZ
(86) Numéro de dépôt international: PCT/EP2014/079206
(87) Numéro de publication internationale: WO 2015/101564

(56) Documents cités:
- EP-B1- 0 594 233
- EP-B1- 0 920 390
- WO-A1-79/00553
- WO-A2-2005/070736
- WO-A2-2007/089300
- WO-A2-2012/104395
- DE-A1- 10 305 842
- DE-A1- 102004 049 434
- FR-A1- 2 697 599
- US-A1- 2013 087 422
- ANDREAS ETTEMEYER ET AL: "Konstruktionselemente", AUSZUG VORLESUNGSSKRIPT DER TU MÜNCHEN, 2010, XP055479300
- VDI Richtlinie No. 2158 „Selbsthemmende und selbstbremsende Getriebe“, S. 1,2 +S 26-28
- Rolof/Matek, „Maschinenelemente''. 1995, 13. Auflage,S. 210-214
- Grob GmbH Antriebstechnik (Hrsg.), „Grundlagen linearer Antriebstechnik", ISBN 978-3-658-03148-0,Seite 60, 27.2.2014

## Description

### Etat de la technique

La présente invention se rapporte à un frein à tambour de véhicule automobile comportant un actionneur avec système vis-écrou, en particulier pour actionner les segments de freinage du frein. Elle concerne également un dispositif de freinage équipés d'un tel actionneur.

Les freins à tambour sont typiquement utilisés dans les véhicules automobiles afin de réaliser trois types de freinage :
- le freinage de service, qui consiste à ralentir et/ou immobiliser le véhicule, typiquement par l'intermédiaire d'une pédale de freinage ;
- le freinage de stationnement, qui permet d'immobiliser le véhicule à l'arrêt, typiquement par l'intermédiaire d'un frein à main ;
- le freinage de secours, qui consiste à ralentir et/ou immobiliser le véhicule en cas de défaillance du freinage de service, et qui est typiquement assuré par le même dispositif que le freinage de stationnement.

Dans la plupart des véhicules équipés de freins à tambour, ces trois types de freinage sont classiquement réalisés par le même frein à tambour. Typiquement, la fonction de freinage de stationnement est assurée par un câble reliant une commande de frein à main situé dans l'habitacle avec un levier situé dans le frein et pivotant autour d'un premier segment de freinage et écartant un second segment de freinage via un levier de réaction.

Un frein à tambour ainsi actionné à la main ou plus généralement avec une force relativement faible fournit un couple de freinage qui peut être insuffisant pour réaliser un freinage de stationnement et surtout un freinage de secours.

Les freins à tambour les plus courants comprennent typiquement un tambour, coaxial avec la roue, et consistant en un cylindre creux solidaire de la pièce à freiner. Il y a, à l'intérieur du tambour, des segments de freinage. Lors du freinage, des garnitures de ces segments frottent sur la surface intérieure du tambour. Pour cela, tandis que des premières extrémités des segments appuient, tangentiellement à la rotation, sur une plaque de butée solidaire d'un plateau immobilisé en rotation, un moyen d'actionnement écarte les deuxièmes extrémités des segments. Lorsque les segments sont mis en pression contre la piste du tambour, tout mouvement ou effort en rotation de la roue imprime un couple de rotation aux segments, qu'ils transmettent au plateau par cette plaque de butée. En général, les deux segments sont actionnés en leurs deux extrémités d'un même côté, typiquement par un même actionneur hydraulique à double piston et fixé au plateau. Ce mode de fonctionnement est appelé « simplex ».

Dans un autre type de frein à tambour, appelé « duo-servo », une biellette flottante assure la transmission de l'effort d'un segment à l'autre segment. En particulier, un actionneur écarte la première extrémité d'un premier segment lequel s'appuie sur le tambour pendant que sa deuxième extrémité prend appui, par l'intermédiaire de la biellette flottante, sur la deuxième extrémité du deuxième segment, flottante elle aussi. Ainsi, la première extrémité du deuxième segment est la seule à prendre appui sur une plaque de butée. Ce type de frein est nettement plus efficace mais présente d'autres inconvénients, notamment car il est plus délicat à ajuster et s'use de façon irrégulière.

Les freins à tambour de type duo-servo sont souvent utilisés exclusivement comme frein de stationnement et de secours, par exemple en utilisant comme tambour la cloche centrale du disque d'un frein à disque de service, combinaison appelée « drum-in-hat » et décrite dans le document EP 0 416 760.

Dans un autre type de frein, on combine le mode simplex pour réaliser le freinage de service et le mode duo-servo pour réaliser le freinage de stationnement et de secours. Dans cet esprit, le document FR 2 697 599 propose d'ajouter un actionneur mécanique à proximité de la plaque de butée pour la commande du frein en mode duo-servo. Cet actionneur s'appuie d'un côté sur une extrémité de l'un des segments et de l'autre sur l'extrémité d'un levier supplémentaire agissant sur l'autre segment.

En outre, il est connu d'activer électriquement les segments de freinage d'un frein à tambour via une transmission vis-écrou. Ainsi, le document US 8 011 482 décrit un mécanisme dans lequel les segments sont actionnés par une biellette déplacée en translation par un système vis-écrou qui est actionné en rotation par un moteur électrique par l'intermédiaire d'un engrenage. Le document EP 2 195 219 présente un système de frein de stationnement dans lequel les segments sont actionnés par un élément fileté déplacé en translation par l'intermédiaire d'une roue entraînée par une vis sans fin solidaire en rotation de l'arbre de sortie d'un moteur électrique.

Les documents WO 2005/070736 A2, WO 2012/104395 A2 et EP 0 920 390 B1 décrivent des actionneurs de frein de stationnement comprenant un système vis-écrou.

Le principe de la transmission vis-écrou permet d'obtenir une très grande démultiplication, d'autant plus grande que l'angle de filetage est faible. Les motorisations électriques, en particulier, sont souvent choisies à vitesse de rotation élevée, ce qui limite leur taille et leur poids pour une puissance donnée, mais oblige à prévoir une très grande démultiplication pour obtenir un déplacement faible avec un effort suffisant. On constate cependant qu'une partie significative de l'énergie fournie par le moteur est absorbée par les moyens de transmission entre le moteur et les segments.

Un but de la présente invention est de proposer un actionneur motorisé des segments de freinage d'un frein à tambour, cet actionneur comprenant un ensemble d'actionnement linéaire par système vis-écrou et étant optimisé en termes de rendement.

### Exposé de l'invention

L'invention a pour objet un frein à tambour tel que défini dans la revendication 1.

L'angle d'hélice est choisi inférieur à l'angle de frottement pour garantir l'irréversibilité de l'actionneur qu'un effort venant des segments ne risque pas de faire tourner l'élément rotatif. Ainsi, il suffit d'activer la motorisation pour appliquer les segments, mais pas pour maintenir les segments appliqués contre la piste de frottement du tambour. Cependant, l'angle d'hélice est choisi le plus grand possible tout en restant inférieur à l'angle de frottement. Il a été trouvé que cela permettait d'améliorer le rendement du système vis-écrou en lui-même et même de l'ensemble de l'actionneur depuis la motorisation jusqu'aux segments.

D'autres caractéristiques avantageuses de l'invention et optionnelles sont décrites dans les revendications 2 à 10.

Enfin, selon une autre caractéristique avantageuse, l'invention consiste en un dispositif de freinage tel que défini dans la revendication 11.

### Liste des figures

D'autres particularités et avantages de l'invention ressortiront de la description détaillée d'un mode de réalisation nullement limitatif et des dessins annexés sur lesquels :
- la FIGURE 1 est une vue en perspective d'un frein à tambour de type « bi-mode » dans un exemple de réalisation de l'invention, en l'absence du tambour ;
- les FIGURES 2, 3 et 4 sont des schémas représentant, en vue de face, le fonctionnement du frein de la FIGURE 1 dans différentes positions du mode de fonctionnement en frein de stationnement :
   ∘ FIGURE 2 : lors du serrage, véhicule immobile,
   ∘ FIGURE 3 : une fois serré, avec couple de maintien dans un sens, et
   ∘ FIGURE 4 : une fois serré, avec couple de maintien dans le sens opposé ;
- La FIGURE 5 est une vue en perspective et écorché partiel de l'actionneur de frein de stationnement du mécanisme de la FIGURE 1, dans un exemple de mode de réalisation à motorisation électrique ;
- La FIGURE 6 est une vue en éclaté de l'actionneur de frein de stationnement de la FIGURE 5 ;
- La FIGURE 7 est une vue en éclaté représentant l'actionneur de frein de stationnement de la FIGURE 5, et le plateau support qui les reçoit dans le mode de réalisation de la FIGURE 1 ; et
- La FIGURE 8 est un schéma illustrant l'angle de filetage selon l'invention.

### Description d'un exemple de mode de réalisation

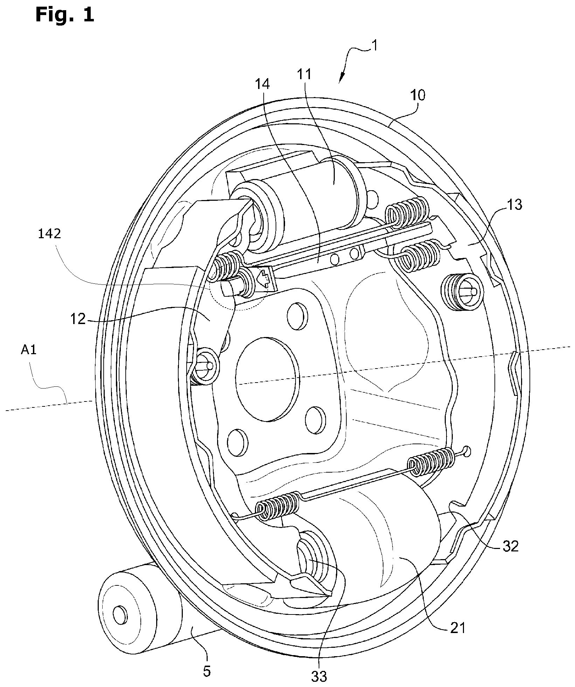

La FIGURE 1 représente un mécanisme de frein à tambour « bi-mode » dans un exemple de mode de réalisation de l'invention. Ce mode de réalisation peut être mis en oeuvre avec différents types d'actionneurs pour le mode de frein de service, et différents types de motorisation pour l'actionneur de frein de stationnement ou de secours.

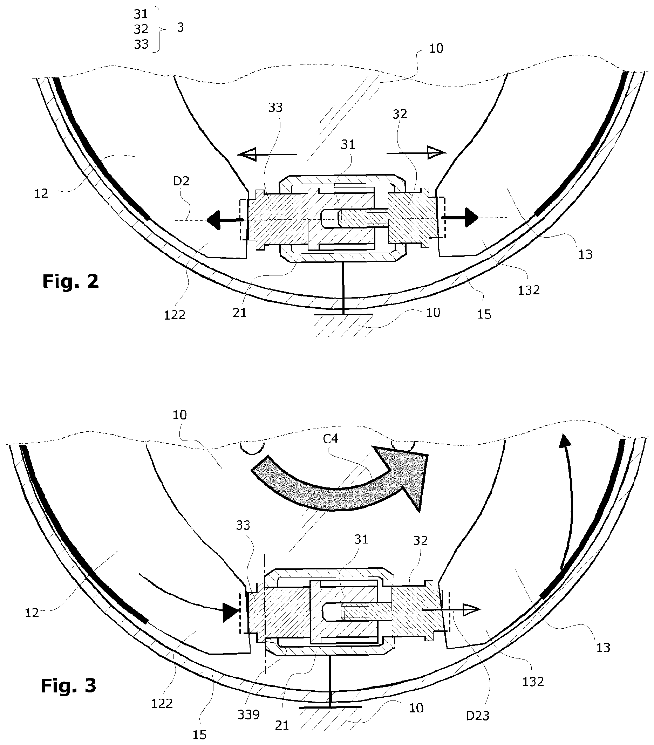

En mode de frein de stationnement ou de secours, comme illustré en FIGURE 2, l'actionneur linéaire 2 comprend un ensemble d'actionnement linéaire 3 qui appuie sur des premières extrémités 122, 132 des segments 12, 13 pour les écarter l'une de l'autre, et mettre ainsi les segments en appui contre la piste de frottement du tambour 15 du frein. Depuis la position de repos, ou depuis la position de freinage de service, l'actionneur linéaire 2 amène ainsi le mécanisme en position de freinage de stationnement, et le retour à la position de repos est réalisé par exemple par des ressorts de rappel reliant entre eux les deux segments.

Dans le présent exemple, l'ensemble d'actionnement linéaire 3 inclut un premier piston 33 et un deuxième piston 32 qui sont déplacés l'un par rapport à l'autre en un mouvement linéaire, selon une direction D2 tangentielle autour de l'axe de rotation A1. Comme indiqué par les deux flèches de la FIGURE 2, par ce déplacement, les deux pistons s'appuient chacun sur une première extrémité 122, 132 de l'un respectif des 12 et 13.

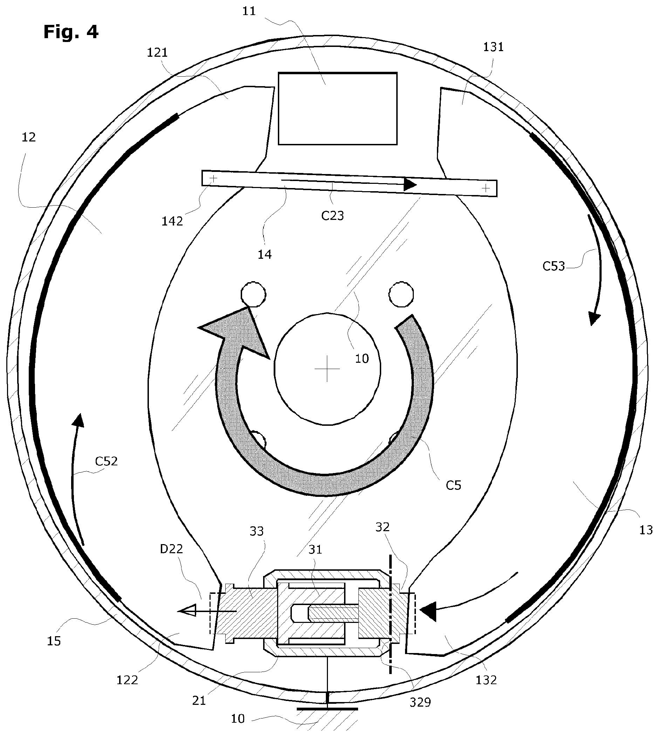

Comme illustré en FIGURES 3 et 4, dès que qu'un couple de rotation, dans un sens C4 ou dans l'autre C5, est appliqué sur le tambour 15 par rapport au plateau 10, le tambour tend par friction à entraîner les segments 12, 13 en rotation dans le sens de ce couple, par exemple lorsque le véhicule est stationné dans une pente ou si le frein de secours est actionné lorsque le véhicule est en mouvement.

La FIGURE 4 illustre plus particulièrement le cas d'un couple C5 dans le sens horaire. Par frottement, le premier segment 12 reçoit ainsi un couple C52 de la part du tambour 15. Par sa deuxième extrémité 121, opposée à la première extrémité, le premier segment 12 prend appui sur un élément intercalaire 14 par une articulation 142, par exemple une liaison pivot ou toute autre coopération de formes comme des encoches engagées entre elles. Sous l'appui du premier segment 12, l'élément intercalaire 14 transmet ainsi un appui C23 à la deuxième extrémité 131 du deuxième segment 13, de façon sensiblement tangentielle autour de l'axe de rotation A1. Le deuxième segment 13 prend ainsi appui sur la piste du tambour 15, et reçoit lui aussi par frottement un couple C53 de la part du tambour. Par sa première extrémité 132, le deuxième segment transmet ce couple C53 au deuxième piston 32.

L'ensemble d'actionnement linéaire 3 est monté libre en translation tangentielle autour de l'axe de rotation A1, sur une course limitée par une butée de chaque côté de sa position centrale. Dans le sens de rotation de la FIGURE 4, sous l'effet des couples C52 et C53 reçus de la part du tambour 15, les segments ont ainsi pour effet de déplacer l'ensemble d'actionnement linéaire 3 dans le sens de ces couples, soit dans une direction D22 selon la flèche blanche vers la gauche et jusqu'à la position de butée illustrée sur la figure.

Ainsi, dans le mode de frein de stationnement ou de secours, la première extrémité 132 du deuxième segment 13 prend appui sur un boîtier 21 du dispositif d'actionnement pour transmettre au plateau 10 le couple de freinage ou de maintien créé par l'appui des segments sur le tambour.

Dans le présent exemple, la première extrémité 132 du deuxième segment 13 et le boîtier 21 de l'ensemble d'actionnement linéaire 3 prennent appui l'un sur l'autre par l'intermédiaire du deuxième piston 32, par exemple par une conformation appropriée, ici un épaulement 329 porté par le piston en vis-à-vis de la surface extérieure du boîtier 21 au niveau de la ligne verticale en trait mixte sur la figure.

Dans le sens de rotation visualisé à la FIGURE 4, le segment dont la première extrémité écartée 122 reçoit en premier le mouvement du tambour est le segment 12 à gauche sur la figure, qui pivote et s'arcboute sur le pivot 142 de sa deuxième extrémité et forme ainsi un segment « comprimé ». De façon proche, recevant ainsi un effort tangentiel par sa deuxième extrémité 131, le deuxième segment 13 se comporte lui aussi en segment « comprimé » en s'arcboutant sur sa première extrémité de butée 132.

Ainsi, en mode de frein de stationnement ou de secours, l'activation de l'actionneur linéaire 2 fait fonctionner ce même ensemble de frein en mode duo-servo, qui fournit un effort d'appui contre le tambour beaucoup plus important que le mode simplex du frein de service, pour un même effort d'actionnement des segments.

Dans le sens de rotation visualisé à la FIGURE 3, un couple C4 dans l'autre sens entraîne les segments 12, 13 et l'élément intercalaire 14 dans l'autre sens, ce qui déplace l'ensemble d'actionnement linéaire 3 dans une direction D23 opposée, selon la flèche blanche vers la droite et jusqu'à la position de butée illustrée sur la figure. Le couple de freinage est alors transmis au boîtier 21 par la première extrémité 122 du segment de gauche 12, par l'intermédiaire de l'épaulement 339 du premier piston 33, au niveau de la ligne verticale en trait mixte sur la figure.

Ce mécanisme de frein à tambour bi-mode est ici représenté en FIGURE 1 et 4 dans un exemple avec un deuxième actionneur 11 de frein de service fonctionnant par énergie hydraulique, et un actionneur linéaire 2 de frein de stationnement et de secours fonctionnant par énergie électrique. Cependant, l'architecture de ce mécanisme peut aussi fonctionner et est aussi prévue avec d'autres types d'énergie pour chacun de ces actionneurs, par exemple par énergie hydraulique ou directement par commande mécanique. En cas d'activation du deuxième actionneur hydraulique 11, les deux deuxièmes extrémités 121, 131 sont puissamment écartées l'une de l'autre tandis que les deux premières extrémités 122, 132 sont en appui sur le boîtier 21 par l'intermédiaire des épaulements des pistons 32, 33, l'ensemble d'actionnement linéaire 3 état à l'été rétracté.

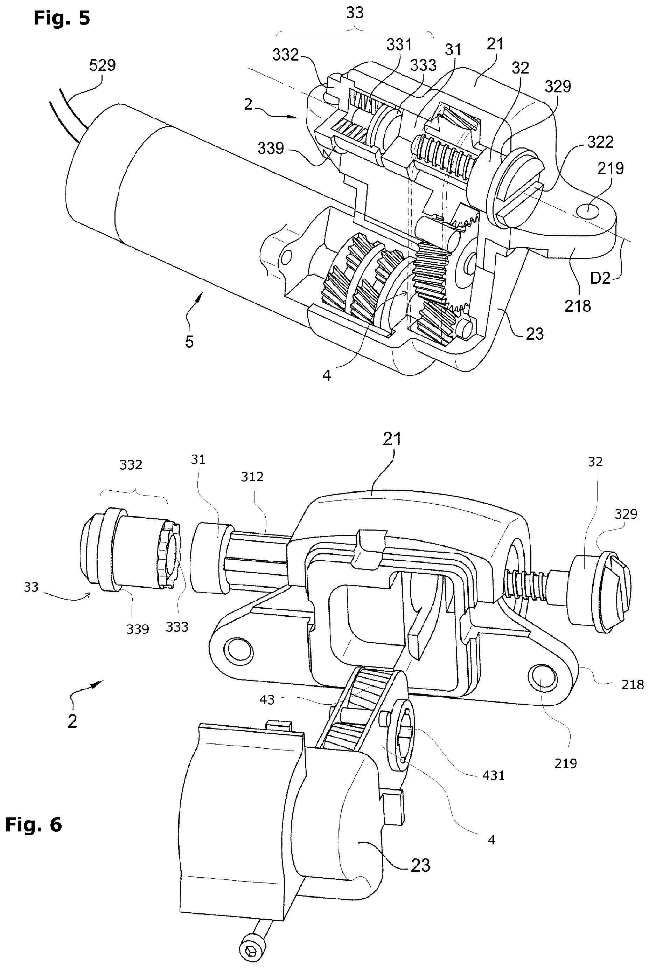

La FIGURE 5 illustre l'ensemble de l'actionneur linéaire 2, de frein de stationnement et de secours.

La fonction de frein de stationnement nécessite le plus souvent de pouvoir laisser le dispositif en position freinée pendant une période prolongée sans action extérieure, par exemple de quelques minutes à plusieurs mois ou même années, et avec très peu ou même aucune consommation d'énergie. Le véhicule comporte donc en général un mécanisme assurant une fonction de blocage en position de freinage de stationnement, et le plus souvent aussi une fonction de stabilisation des efforts dans la chaîne mécanique réalisant l'appui des segments sur le tambour en cas de variations dimensionnelles des éléments qui la constituent. Dans les freins classiques, ces fonctions sont assurées par un cliquet retenant l'organe ou le levier de manoeuvre du « frein à main » et respectivement par une élasticité du câble de commande (non représenté).

Dans le mode de réalisation de la FIGURE 1, pour fournir la fonction de stabilisation des efforts dans la chaîne d'appui, l'actionneur linéaire 2 écarte les premières extrémités 122, 132 des deux segments 12, 13 par l'intermédiaire d'un élément 33 déformable élastiquement selon la direction d'actionnement D2, dit élément élastique. Dans ce mode de réalisation, cet élément élastique 33 est réalisé par l'un des deux pistons, ici le premier piston 33 qui est réalisé élastiquement compressible avec une raideur déterminée pour fournir une course permettant, sans activation de l'actionneur linéaire 2 :
- de maintenir l'effort d'appui des segments 12, 13 contre la piste de frottement en cas de variations dimensionnelles dans un sens, par exemple en cas de rétraction thermique des segments ou des éléments de la chaîne mécanique créant cet appui, tels que les pistons ou le mécanisme qui les écarte, ou par exemple en cas de dilatation thermique du tambour ; et
- de limiter l'augmentation des efforts dans le mécanisme en cas de variations dimensionnelles dans l'autre sens, pouvant être causée par exemple par une rétraction thermique du tambour lorsque celui-ci se refroidit à l'arrêt après avoir été échauffé en tant que frein de service au cours d'un trajet.

Cet élément élastique permet ainsi de limiter et le plus souvent d'éviter tout besoin de réactivation automatique du système en cours de stationnement, aussi appelé « re-clamping », qui peut être consommateur d'énergie et sujet à des dysfonctionnements pouvant être lourds de conséquences.

Dans l'exemple de la FIGURE 5, pour constituer cet élément élastique, le premier piston 33 comprend une tête de piston 332 présentant vers l'arrière une jupe à l'intérieur de laquelle peut coulisser un fond de piston 333. La tête de piston et le fond de piston viennent en appui l'un contre l'autre par l'intermédiaire d'une structure élastique compressible 331, ici un empilement de rondelles coniques en acier, dites rondelles « Belleville ». L'ensemble est ici maintenu par un sertissage de l'extrémité de la jupe autour de l'arrière du fond de piston 333.

Dans le mode de réalisation de la FIGURE 1, l'ensemble d'actionnement linéaire 3 comprend un élément fileté 31 rotatif et un élément fileté 32 non rotatif interagissant entre eux pour former un système vis-écrou. Dans l'exemple représenté, l'élément fileté rotatif est un écrou et l'élément fileté non rotatif est une vis. Ce système vis-écrou produit le mouvement linéaire sous l'effet d'une rotation de l'élément fileté rotatif 31 par rapport à l'élément fileté 32. Il transforme le couple reçu par l'élément rotatif 31 en une force axiale sollicitant les deux éléments 31, 32 l'un par rapport à l'autre selon la direction D2 (voir la FIGURE 2).

L'angle d'hélice du filetage par rapport à la direction circonférentielle de ce système vis-écrou est choisi pour que la transmission d'effort obtenue soit irréversible, en choisissant un angle d'hélice qui est inférieur à l'angle de frottement φ qui caractérise la force résistant au mouvement de glissement entre les deux filetages en fonction notamment de leur matière respective, leur état de surface, le lubrifiant utilisé. L'irréversibilité ainsi obtenue fournit la fonction de blocage en position de freinage de stationnement. C'est-à-dire qu'un effort reçu par les pistons 32, 33 depuis les segments 13, 12 est bloqué par le non-glissement entre les filetages des deux éléments 31, 32 du système vis-écrou. Un tel effort est incapable de provoquer la rotation de l'élément rotatif 31 ni par conséquent une variation de la longueur totale du système vis-écrou selon la direction D2. En outre, l'effort n'est pas transmis jusqu'à la motorisation, rendant ainsi inutile de bloquer le moteur ou de le maintenir en charge.

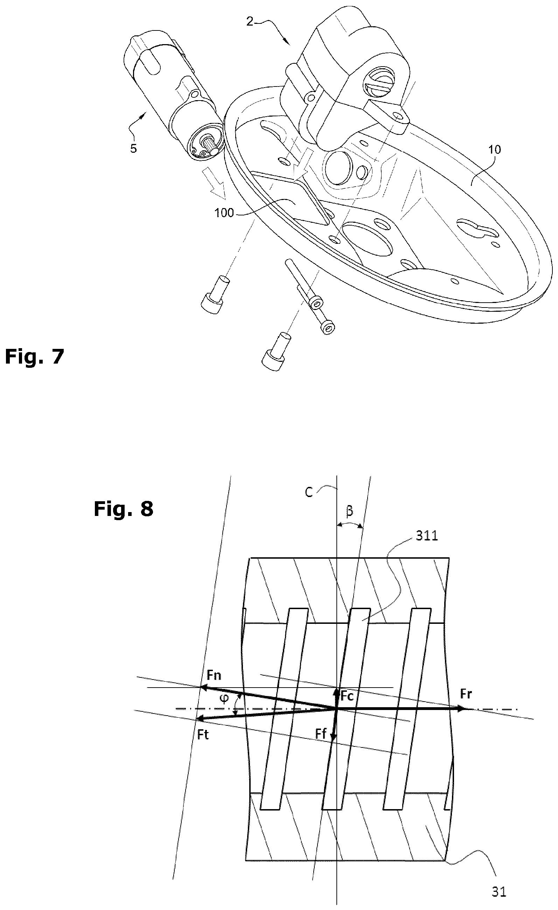

La FIGURE 8 illustre une partie du filetage 311 de l'écrou 31, avec un angle d'hélice β par rapport à la direction circonférentielle C. Dans le cas où une force est appliquée axialement par la vis vers la gauche de la figure, l'écrou subit une force normale Fn sur le filetage et une force de réaction Fr de la part du piston 33 que l'écrou devrait pousser pour suivre le mouvement axial de la vis. Ces deux forces ont une résultante Fc suivant la direction circonférencielle C. Mais toute rotation de l'écrou s'accompagne d'une force de frottement opposée Ff telle que Ff et Fn ont une résultante Ft formant avec la force Fn un angle φ qui est l'angle de frottement. Du fait que β est choisi inférieur à φ, la force de frottement Ff est supérieure à la force Fc, et empêche en conséquence la force Fc de provoquer la rotation de l'écrou. Pour la clarté de la figure, on a exagéré la différence φ et β par rapport aux valeurs selon l'invention.

Par exemple, avec des pièces lubrifiées en acier, par exemple en acier forgé, le coefficient de frottement est compris entre 0,1 et 0,2. Une valeur de 0,1 pour ce coefficient de frottement détermine un angle de frottement de φₗᵢₘᵢₜₑ=5,7°. Pour que la transmission d'effort soit irréversible, l'angle d'hélice β du système doit être inférieur à l'angle de frottement, soit β<5,7°.

Le principe de la transmission vis-écrou permet d'obtenir une très grande démultiplication, d'autant plus grande que l'angle d'hélice est faible.

Dans le cas des motorisations électriques, en particulier, la nature de la motorisation fournit souvent des vitesses de rotation élevées, ce qui oblige à prévoir une très grande démultiplication pour obtenir un déplacement faible avec un effort suffisant. Il pourrait donc paraître intéressant d'utiliser un angle d'hélice très faible pour fournir cette démultiplication et limiter le nombre d'engrenages intermédiaires.

Cependant, dans ce mode de réalisation, l'angle d'hélice du filetage du système vis-écrou est choisi le plus grand possible tout en restant inférieur à l'angle de frottement. Cela permet d'améliorer le rendement du système vis-écrou en lui-même. Cette particularité est particulièrement avantageuse combinée avec les caractéristiques de la transmission, décrites ci-après, qui permettent de fournir plus de démultiplication tout en gardant un bon rendement global.

Cet angle d'hélice est choisi par exemple avec une valeur de 0,25° en dessous de l'angle limite, ou même de 0,15° en dessous. Par exemple dans le cas d'un coefficient de frottement de 0,1, avec un filetage à profil trapézoïdal à 15°, l'angle d'hélice β choisi sera compris entre 5,45° et 5,7°, ou même entre 5,55° et 5,7°, et de préférence avec une valeur de β=5,6°.

Le contact de frottement contre les filetages mâle et femelle a lieu à flanc de filet sur une zone comprise entre les deux sommets de filet. Dans une version, l'angle d'hélice est mesuré dans cette zone, et de façon encore plus sécuritaire le long du sommet du filetage femelle. Dans une autre version, l'angle est mesuré le long du cercle de diamètre moyen de la zone de contact. En fonction du diamètre choisi on prend une marge de sécurité plus ou moins grande par rapport à l'angle de frottement. En tout état de cause, on fait en sorte que l'irréversibilité soit garantie en fonctionnement, y compris dans des conditions thermiques extrêmes et en cas d'usure des flancs de filet.

De préférence, des rainures prévues dans la surface intérieure de l'écrou 31 communiquent avec son filetage pour former une réserve de lubrifiant.

Comme visible par exemple en FIGURE 5 et 6, le système vis-écrou comprend l'un des pistons, ici le deuxième piston 32. Celui-ci prend la forme d'une vis-piston non rotative comprenant une partie mâle filetée 32, et une tête de piston portant une rainure 322 recevant la tranche d'un segment 13. La vis est aussi empêchée de tourner autour de son axe. La vis-piston 32 interagit avec l'autre partie du système vis-écrou, formée par un écrou 31 muni d'un filetage intérieur. Alternativement, les éléments mâles et femelles du système vis-écrou pourraient être inversés, l'écrou étant alors non-rotatif et réalisé d'une seule pièce avec l'un des pitons. Dans le présent mode de réalisation, c'est l'écrou 31 qui est rotatif et qui reçoit l'effort d'actionnement. L'autre piston 33 est lui aussi immobilisé à l'encontre de toute rotation autour de son axe. Il est muni d'une rainure recevant l'appui de la première extrémité 122 du segment correspondant pour assurer cette immobilisation. Le piston 33 est appuyé sur l'écrou 31, avec possibilité de glissement rotatif entre eux.

Dans ce mode de réalisation, la rotation est transmise au système vis-écrou de l'ensemble d'actionnement linéaire 3 depuis un motoréducteur 5 par un sous-ensemble de transmission 4 comprenant des roues dentées à axes parallèles, engrenées entre elles et montées pour transmettre le mouvement rotatif de la motorisation à l'un des éléments du système vis-écrou.

Les axes de ces roues dentées sont aussi parallèles à la direction D2 du mouvement linéaire obtenu et à l'axe de rotation du motoréducteur 5.

Cette rotation est transmise à l'élément rotatif 31 du système vis-écrou par une forme extérieure, réalisée ici par des cannelures 312 d'entraînement portées par l'écrou 31.

L'ensemble d'actionnement linéaire 3 est monté dans le boîtier 21 de l'actionneur linéaire 2, aussi appelé boîtier principal. C'est ce boîtier 21 qui sert d'ancrage sur le plateau 10. Il est réalisé par exemple en métal, comme de la fonte d'aluminium. Sur ce boîtier principal est assemblé un boîtier secondaire 23, de façon à renfermer entre eux de façon étanche (au moins à la poussière) le sous-ensemble de transmission 4 comprenant plusieurs roues dentées à contact extérieur.

La roue de sortie 43 du sous-ensemble de transmission 4 entraîne l'écrou 31 du système vis-écrou par un alésage axial portant une forme intérieure 431, ici des cannelures, entourant l'écrou 31 et coopérant avec sa forme extérieure 312 pour réaliser un couplage rotatif avec liberté de coulissement axial.

La forme intérieure 431 de la roue de sortie 43 et la forme extérieure 312 de l'écrou 31 forment ensemble une liaison assurant un couplage rotatif avec liberté de coulissement axial, selon la direction d'actionnement D2, sur une courbe suffisante pour permettre à l'ensemble d'actionnement linéaire 3 de coulisser complètement jusqu'à venir en butée par un épaulement 329 ou par un autre 339 sur le boîtier principal 21 selon le sens du couple de freinage ou de maintien à transmettre, comme illustré en FIGURES 4 et 3 respectivement.

Comme illustré en FIGURE 7, l'ensemble des deux boîtiers assemblés de l'actionneur linéaire 2 est engagé de façon étanche dans une ouverture 100 du plateau 10. Le motoréducteur 5 est alors assemblé sur la partie du boîtier secondaire 23 qui dépasse du plateau 10 du côté opposé aux segments, c'est-à-dire du côté « arrière » du plateau. L'actionneur linéaire 2 est fixé sur le plateau 10 de façon solidaire par son boîtier principal 2 grâce à des vis engagées dans des orifices 219 (FIGURES 5 et 6) prévus dans des linguets 218 appartenant au boîtier principal 21.

### Nomenclature

- 1: frein à tambour
- 10: plateau support
- 100: ouverture de plateau
- 11: deuxième actionneur - frein de service
- 12, 13: segments de freinage
- 121, 131: deuxièmes extrémités des segments
- 122, 132: premières extrémités des segments
- 14: élément intercalaire - biellette de rattrapage de jeu
- 142: articulation d'élément intercalaire
- 15: tambour de roue
- 2: actionneur linéaire - frein de stationnement
- 21: boîtier principal
- 218: linguets de fixation de boîtier principal
- 219: orifices de fixation de boîtier principal
- 23: boîtier secondaire
- 3: ensemble d'actionnement linéaire
- 31: écrou cannelé de système vis-écrou
- 311: filetage d'écrou cannelé
- 312: cannelures externes d'écrou
- 32: vis de système vis-écrou, formant piston
- 322: rainure de vis-piston
- 329: épaulement d'appui de la vis-piston - transmission du couple de freinage
- 33: piston élastique linéaire - "spring package"
- 331: élément élastique - empilement de rondelles Belleville
- 332: tête de piston élastique
- 333: fond de piston élastique
- 339: épaulement d'appui du piston élastique - transmission du couple de freinage
- 4: sous-ensemble de transmission
- 43: roue de sortie
- 431: cannelures intérieures de roue de sortie
- 5: motoréducteur

## Revendications

1. Frein à tambour (1) comprenant deux segments (12, 13) montés sur un plateau (10) de façon à pouvoir s'écarter l'un de l'autre pour venir en appui sur une piste de frottement portée par l'intérieur d'un tambour mobile en rotation par rapport audit plateau, comprenant un actionneur linéaire (2) agencé pour écarter l'une de l'autre deux premières extrémités (122, 132) desdits segments qui sont en vis-à-vis l'une de l'autre, l'actionneur linéaire (2) comprenant
un sous-ensemble de transmission (4) entraîné en entrée par une motorisation rotative (5) et entraînant en sortie un ensemble d'actionnement linéaire (3),
ledit ensemble d'actionnement linéaire comprenant un élément rotatif (31) et un deuxième élément (32) coopérant ensemble par des filetages mâle et femelle respectifs pour former un système vis-écrou, agencé pour appliquer sélectivement lesdits segments contre le tambour dudit frein en écartant l'une de l'autre des premières extrémités (122, 132) desdits segments sous l'effet d'un entraînement en rotation dudit élément rotatif (31) par l'intermédiaire dudit sous-ensemble de transmission (4),
**caractérisé en ce que** l'angle d'hélice β des filetages du système vis-écrou est inférieur à l'angle de frottement φ, avec un écart d'au plus 3% de la valeur dudit angle de frottement
et **en ce que** l'élément rotatif (31) du système vis-écrou est monté solidaire en rotation et coulissant coaxialement avec une roue (43) du sous-ensemble de transmission (4).

2. Frein à tambour (1) selon la revendication 1, **caractérisé en ce que** l'angle d'hélice β des filetages du système vis-écrou est choisi avec une valeur de β = 0,98 x φ, où φ est l'angle de frottement.

3. Frein à tambour (1) selon la revendication 1 ou 2, **caractérisé en ce que** les filetages présentent un profil de type trapézoïdal.

4. Frein à tambour (1) selon l'une quelconque des revendications précédentes, **caractérisé en ce que** le filetage femelle communique avec une ou plusieurs rainures formant une réserve de lubrifiant.

5. Frein à tambour (1) selon l'une quelconque des revendications précédentes, **caractérisé en ce que** l'ensemble d'actionnement linéaire (3) est monté flottant entre les deux segments (12, 13) suivant la direction d'actionnement (D2) avec une course limitée par un appui de butée de transmission de couple à chacune de ses extrémités.

6. Frein à tambour (1) selon l'une quelconque des revendications précédentes, **caractérisé en ce que** l'élément rotatif (31) est entraîné en rotation par un engrenage à contacts extérieurs composé de roues à axes parallèles.

7. Frein à tambour (1) selon l'une quelconque des revendications précédentes, **caractérisé en ce que** l'élément rotatif (31) forme l'écrou du système vis-écrou.

8. Frein à tambour (1) selon l'une quelconque des revendications précédentes, **caractérisé en ce que** l'ensemble d'actionnement linéaire (3) comprend un élément (33) élastiquement déformable, au moins selon la direction d'actionnement (D2), sous l'effet d'un effort d'écartement appliqué aux segments par le système vis-écrou.

9. Frein selon la revendication 1, **caractérisé en ce que** les deux segments (12, 13) sont articulés à une biellette (14) mobile par rapport au plateau et qui les relie entre eux au voisinage de leurs deuxièmes extrémités, opposées aux premières extrémités, ladite biellette étant apte à transmettre de l'un (12) desdits segments à l'autre (13) desdits segments un effort qui pousse ledit autre segment (13) en appui contre un élément d'ancrage (21) fixe par rapport au plateau (10).

10. Frein selon la revendication 1, **caractérisé en ce qu'**il comprend en outre un deuxième actionneur assurant une deuxième fonction de freinage, notamment de service (11), ledit deuxième actionneur étant agencé pour écarter l'une de l'autre les deuxièmes extrémités des deux segments (12, 13) tandis que les premières extrémités (122, 132) viennent en butée par rapport au plateau (10).

11. Dispositif de freinage pour véhicule ou sous-ensemble de véhicule, notamment routier, comprenant un disque de frein interagissant avec des plaquettes de frein pour réaliser une deuxième fonction de freinage, notamment de frein de service, **caractérisé en ce qu'**il comprend un frein selon la revendication 1, agencé pour assurer une première fonction de freinage, notamment de frein de stationnement et/ou de secours, et **en ce que** son tambour est solidaire de, et coaxial avec, ledit disque de frein.

## Patentansprüche

1. Trommelbremse (1), umfassend zwei Backen (12, 13), die an einer Platte (10) derart angebracht sind, dass sie sich voneinander entfernen können, um auf einem Reibungsring aufzuliegen, der vom Inneren einer gegenüber der Platte drehbeweglichen Trommel getragen wird, umfassend einen Linearaktor (2), der dazu eingerichtet ist, zwei erste Enden (122, 132) der Backen, die einander gegenüberliegen, voneinander zu entfernen, wobei der Linearaktor (2) umfasst
eine Übertragungsuntereinheit (4), die eingangsseitig durch eine Drehmotorisierung (5) angetrieben wird und die ausgangsseitig eine Linearbetätigungsanordnung (3) antreibt,
wobei die Linearbetätigungsanordnung ein Drehelement (31) und ein zweites Element (32) umfasst, die durch jeweilige Außen- und Innengewinde zusammenwirken, um ein Schraube-Mutter-System zu bilden, dazu eingerichtet, die Backen an die Trommel der Bremse dadurch selektiv anzulegen, dass erste Enden (122, 132) der Backen unter der Wirkung eines Drehantriebs des Drehelements (31) mittels der Übertragungsuntereinheit (4) voneinander entfernt werden,
**dadurch gekennzeichnet, dass** der Steigungswinkel β der Gewinde des Schraube-Mutter-Systems kleiner ist als der Reibungswinkel φ, mit einer Abweichung von höchstens 3 % von dem Wert des Reibungswinkels,
und dass das Drehelement (31) des Schraube-Mutter-Systems mit einem Rad (43) der Übertragungsuntereinheit (4) drehfest und koaxial verschieblich angebracht ist.

2. Trommelbremse (1) nach Anspruch 1, **dadurch gekennzeichnet, dass** der Steigungswinkel β der Gewinde des Schraube-Mutter-Systems mit einem Wert von β = 0,98 x φ, wobei φ der Reibungswinkel ist, gewählt ist.

3. Trommelbremse (1) nach Anspruch 1 oder 2, **dadurch gekennzeichnet, dass** die Gewinde ein trapezartiges Profil aufweisen.

4. Trommelbremse (1) nach einem der vorhergehenden Ansprüche, **dadurch gekennzeichnet, dass** das Innengewinde mit einer oder mehreren Nuten, die eine Schmiermittelreserve bilden, in Verbindung steht.

5. Trommelbremse (1) nach einem der vorhergehenden Ansprüche, **dadurch gekennzeichnet, dass** die Linearbetätigungsanordnung (3) zwischen den beiden Backen (12, 13) in der Betätigungsrichtung (D2), mit einem durch eine Drehmomentübertragungs-Anschlagstütze an jedem ihrer Enden begrenzten Weg, schwebend angebracht ist.

6. Trommelbremse (1) nach einem der vorhergehenden Ansprüche, **dadurch gekennzeichnet, dass** das Drehelement (31) durch ein Getriebe mit Außenkontakten, das aus Rädern mit parallelen Achsen besteht, drehangetrieben wird.

7. Trommelbremse (1) nach einem der vorhergehenden Ansprüche, **dadurch gekennzeichnet, dass** das Drehelement (31) die Mutter des Schraube-Mutter-Systems bildet.

8. Trommelbremse (1) nach einem der vorhergehenden Ansprüche, **dadurch gekennzeichnet, dass** die Linearbetätigungsanordnung (3) ein Element (33) umfasst, das unter der Wirkung einer an die Backen durch das Schraube-Mutter-System angelegten Spreizkraft wenigstens in der Betätigungsrichtung (D2) elastisch verformbar ist.

9. Bremse nach Anspruch 1, **dadurch gekennzeichnet, dass** die beiden Backen (12, 13) mit einer gegenüber der Platte beweglichen Schubstange (14) gelenkig verbunden sind, welche sie in der Nähe ihrer zweiten, den ersten Enden gegenüberliegenden Enden miteinander verbindet, wobei die Schubstange dafür geeignet ist, von einer (12) der Bremsbacken auf die andere (13) der Bremsbacken eine Kraft zu übertragen, welche die andere Bremsbacke (13) gegen ein gegenüber der Platte (10) feststehendes Verankerungsmittel (21) andrückt.

10. Bremse nach Anspruch 1, **dadurch gekennzeichnet, dass** sie ferner einen zweiten Aktor umfasst, der für eine zweite Bremsfunktion, insbesondere einer Betriebsbremse (11) sorgt, wobei der zweite Aktor dazu eingerichtet ist, die zweiten Enden der beiden Backen (12, 13) voneinander zu entfernen, während die ersten Enden (122, 132) gegenüber der Platte (10) in Anschlag kommen.

11. Bremsvorrichtung für ein Fahrzeug oder eine Untereinheit eines Fahrzeugs, insbesondere Straßenfahrzeugs, umfassend eine Bremsscheibe, die mit Bremsbelägen interagiert, um eine zweite Bremsfunktion, insbesondere einer Betriebsbremse zu erfüllen, **dadurch gekennzeichnet, dass** sie eine Bremse nach Anspruch 1 umfasst, derart angeordnet, um für eine erste Bremsfunktion, insbesondere einer Park- und/oder Hilfsbremse zu sorgen, und dass ihre Trommel mit der Bremsscheibe fest und koaxial verbunden ist.

## Claims

1. Drum brake (1) comprising two shoes (12, 13) mounted on a plate (10) so as to be able to move apart from one another in order to press on a braking surface borne by the inside of a drum which is mobile in rotation with respect to said plate, comprising a linear actuator (2) arranged in order to move apart from one another two first ends (122, 132) of said shoes which are facing each other, the linear actuator (2) comprising
a transmission sub-assembly (4) driven at the input by a rotary drive (5) and driving at the output a linear actuator assembly (3),
said linear actuator assembly comprising a rotary element (31) and a second element (32) engaging with each other via respective male and female threads in order to form a screw-and-nut system, arranged in order to selectively apply said shoes against the drum of said brake by moving one of the first ends (122, 132) of said shoes apart from the other under the effect of driving said rotary element (31) in rotation via said transmission sub-assembly (4),
**characterized in that** the helix angle β of the threads of the screw-and-nut system is smaller than the angle of friction φ, with a difference of no more than 3% of the value of said angle of friction
and **in that** the rotary element (31) of the screw-and-nut system is mounted firmly fixed in rotation and sliding coaxially with a wheel (43) of the transmission sub-assembly (4).

2. Drum brake (1) according to claim 1, **characterized in that** the helix angle β of the threads of the screw-and-nut system is chosen with a value of β = 0.98 x φ, where φ is the angle of friction.

3. Drum brake (1) according to claim 1 or 2, **characterized in that** the threads have a profile of trapezoidal type.

4. Drum brake (1) according to any one of the preceding claims, **characterized in that** the female thread connects with one or more grooves forming a reserve of lubricant.

5. Drum brake (1) according to any one of the preceding claims, **characterized in that** the linear actuator assembly (3) is mounted floating between the two shoes (12, 13) in the direction of actuation (D2) with a travel limited by pressing against the torque transmission stop at each of its ends.

6. Drum brake (1) according to any one of the preceding claims, **characterized in that** the rotary element (31) is driven in rotation by an external gear composed of wheels with parallel axes.

7. Drum brake (1) according to any one of the preceding claims, **characterized in that** the rotary element (31) forms the nut of the screw-and-nut system.

8. Drum brake (1) according to any one of the preceding claims, **characterized in that** the linear actuator assembly (3) comprises an elastically deformable element (33), at least in the direction of actuation (D2), under the effect of a separating force applied to the shoes by the screw-and-nut system.

9. Brake according to claim 1, **characterized in that** the two shoes (12, 13) are hinged on a rod (14) which is mobile with respect to the plate and which connects them to each other in the vicinity of the second ends thereof, opposite the first ends, said rod being capable of transmitting a force from one of said shoes (12) to the other of said shoes (13) which pushes said other shoe against an anchor (21) which is fixed with respect to the plate (10).

10. Brake according to claim 1, **characterized in that** it also comprises a second actuator providing a second braking function, in particular service braking (11), said second actuator being arranged in order to move one of the second ends of the two shoes (12, 13) apart from the other while the first ends (122, 132) abut against the plate (10).

11. Braking device for a vehicle or a vehicle sub-assembly, in particular for a road vehicle, comprising a brake disc interacting with brake pads in order to carry out a second braking function, in particular service braking, **characterized in that** it comprises a brake according to claim 1, arranged in order to provide a first braking function, in particular parking and/or emergency braking, and **in that** its drum is firmly fixed to, and coaxial with, said brake disc.
